# EUROPÄISCHE PATENTANMELDUNG

(11) **EP 2 754 537 A2**
(43) Veröffentlichungstag der Anmeldung: **16.07.2014**
(21) Anmeldenummer: 13005704.5
(22) Anmeldetag: 06.12.2013
(51) Int. Cl.: B25J 9/16

(54) **Konfigurierbare Sicherheitsüberwachung für eine Roboteranordnung**

(30) Priorität: 09.01.2013 DE 102013000250
(71) Anmelder: KUKA Laboratories GmbH, 86165 Augsburg (DE)
(72) Erfinder: Bonin, Uwe, 86316 Friedberg (DE); Ruemping, Jonas, 80337 München (DE); Ueberle, Marc-Walter, 86316 Friedberg (DE); Hartmann, Christian, 86343 Königsbrunn (DE); Pesotski, Denis, 86316 Friedberg (DE); Görög, Botond, 82166 Gräfelfing (DE); Milighetti, Giulio, 86316 Friedberg (DE); Bertossi, Robert, 86368 Gersthofen (DE)
(74) Vertreter: Schlotter, Alexander Carolus Paul

(57) **Zusammenfassung**

Ein erfindungsgemäßes Sicherheitsüberwachungsmittel für eine Roboteranordnung mit wenigstens einem Roboter (1), weist ein Konfigurationsmittel (4) zum Konfigurieren einer Verknüpfungsfunktionsanordnung mit wenigstens einer ersten Verknüpfungsfunktion (V1, V2, V3), in der eine, insbesondere fest vorgegebene, Anzahl von Überwachungsfunktionen (N, G, W, B, D) einer

Überwachungsfunktionsanordnung, die jeweils in Abhängigkeit von wenigstens einem Signaleingang der Roboteranordnung einen Verletzt-Zustand, einen Nicht-Verletzt-Zustand und einen Fehler-Zustand aufweisen können, jeweils derart miteinander logisch verknüpft sind, dass die erste Verknüpfungsfunktion einen Reaktionszustand (STOP 0, STOP 1) genau dann aufweist, wenn keine der Überwachungsfunktionen dieser Verknüpfungsfunktion den Nicht-Verletzt-Zustand aufweist, und/oder wenigstens einer zweiten Verknüpfungsfunktion auf, in der eine, insbesondere fest vorgegebene, Anzahl von Überwachungsfunktionen der zweiten Überwachungsfunktionsanordnung jeweils derart miteinander logisch verknüpft sind, dass diese Verknüpfungsfunktion einen Reaktionszustand genau dann nicht aufweist, wenn alle Überwachungsfunktionen dieser Verknüpfungsfunktion den Verletzt-Zustand aufweisen.

## Beschreibung

Die vorliegende Erfindung betrifft eine konfigurierbare Sicherheitsüberwachung für eine Roboteranordnung.

Roboteranordnungen mit einem oder mehreren Robotern werden nach betriebsinterner Praxis sicherheitsüberwacht, beispielsweise auf eine Geschwindigkeitsüberschreitung oder Schutzraumverletzung durch einen Roboter, die Betätigung bzw. das Vorliegen eines Nothalts oder dergleichen. Wird eine der Überwachungen verletzt, wird bisher die komplette Roboteranordnung sicher stillgesetzt.

Eine solche Stillsetzung, insbesondere mit entsprechendem Aufwand zur Wiederaufnahme eines Automatikbetriebs, ist jedoch nicht in jedem Fall prinzipiell notwendig. Weist beispielsweise ein Sensor, der eine Schutzzauntür überwacht, eine Fehlfunktion auf, könnte ein Einrichte- oder Testbetrieb, in dem eine Bedienperson mit betätigtem Zustimmtaster sich innerhalb des Arbeitsraums der Roboteranordnung befindet, d.h. die Schutzzauntür geöffnet sein darf, prinzipiell weiter durchgeführt werden.

Aufgabe der vorliegenden Erfindung ist es, eine Sicherheitsüberwachung für eine Roboteranordnung zu verbessern.

Diese Aufgabe wird durch ein Sicherheitsüberwachungsmittel mit den Merkmalen des Anspruchs 1 gelöst. Anspruch 8 stellt ein Verfahren zur Sicherheitsüberwachung einer Roboteranordnung mittels eines solchen Sicherheitsüberwachungsmittels unter Schutz, die Ansprüche 14, 15 eine Roboteranordnung mit einem solchen Sicherheitsüberwachungsmittel bzw. ein Computerprogrammprodukt zur Durchführung eines solchen Verfahrens. Die Unteransprüche betreffen vorteilhafte Weiterbildungen.

Eine Roboteranordnung nach einem Aspekt der vorliegenden Erfindung weist einen oder mehrere Roboter, insbesondere Industrie- und/oder Leichtbauroboter auf, vorzugsweise mit sechs oder mehr Bewegungsachsen. In einer Weiterbildung weist die Roboteranordnung eine Steuerung zum Steuern des bzw. der Roboter auf, wobei die Steuerung, wenigstens teilweise, zentral bzw. zum Steuern mehrerer Roboter ausgebildet bzw. eingerichtet sein und/oder Einzelsteuerungen zum Steuern je genau eines Roboters aufweisen kann.

In einer Ausführung weist die Roboteranordnung eine Erfassungsmittelanordnung mit zwei oder mehr Erfassungsmitteln zum, insbesondere redundanten, vorzugsweise diversitären, Erfassen je einer ein- oder mehrdimensionalen Sicherheitsgröße auf. Ein Erfassungsmittel im Sinne der vorliegenden Erfindung kann insbesondere zum Erfassen einer Stellung und/oder Geschwindigkeit einer oder mehrerer, insbesondere aller, Gelenke eines oder mehrerer Roboter der Roboteranordnung ausgebildet sein. In einer Weiterbildung kann das Erfassungsmittel zum Erfassen einer Position, Orientierung und/oder Geschwindigkeit eines roboterfesten Referenzpunktes, insbesondere des TCPs, eines robotergeführten Werkzeugs oder dergleichen ausgebildet sein. Zusätzlich oder alternativ kann ein Erfassungsmittel zum Erfassen eines Nothalts ausgebildet sein, insbesondere als Nothalt-Schalter. Zusätzlich oder alternativ kann ein Erfassungsmittel zum Erfassen einer Zustimmung einer Bedienperson zu einer Bewegen der Roboteranordnung ausgebildet sein, insbesondere als, vorzugsweise dreistufiger, Zustimm-Schalter. Zusätzlich oder alternativ kann ein Erfassungsmittel zum Erfassen einer ausgewählten Betriebsart ausgebildet sein, insbesondere einer Automatik-Betriebsart, in der die Roboteranordnung automatisch ein vorgegebenes Programm abarbeitet, einer Einrichte-Betriebsart, in der die Roboteranordnung manuell verfahrbar ist, und/oder einer Test-Betriebsart, in der die Roboteranordnung ein vorgegebenes Programm manuell steuert und/oder mit reduzierter Geschwindigkeit abarbeitet, insbesondere als Betriebsart-Wahl-Schalter. Zusätzlich oder alternativ kann ein Erfassungsmittel zum Überwachen eines Raumes ausgebildet sein, insbesondere zur optischen, thermischen, kapazitiven, induktiven und/oder elektromagnetischen Erfassung von Robotern der Roboteranordnung und/oder von Hindernissen, insbesondere Personen. Zusätzlich oder alternativ kann ein Erfassungsmittel zum Überwachen eines Bedienerschutzes ausgebildet sein, insbesondere zur Überwachung einer oder mehrerer Schutzzaun-Öffnungen, insbesondere Tür(en). Zusätzlich oder alternativ kann ein Erfassungsmittel zum Erfassen eines Werkzeugs ausgebildet sein, insbesondere zum Erfassen eines Vorhandenseins, eines Typs und/oder eines Betriebszustands eines robotergeführten Werkzeugs. Zusätzlich oder alternativ kann ein Erfassungsmittel zum Erfassen eines, insbesondere sicheren, Eingangs, insbesondere eines sicheren Signaleingangs ausgebildet sein. Über einen sicheren (Signal)eingang können vorteilhafterweise weitere Sicherheitsfunktionalitäten implementiert werden.

Nach einem Aspekt der vorliegenden Erfindung weist ein Sicherheitsüberwachungsmittel für eine solche Roboteranordnung ein Konfigurationsmittel auf, welches zum Konfigurieren einer Verknüpfungsfunktionsanordnung eingerichtet ist.

Ein Mittel im Sinne der vorliegenden Erfindung kann hard- und/oder softwaretechnisch ausgebildet sein, insbesondere ein oder mehrere Programme oder Programmmodule und/oder eine, vorzugsweise mit einem Speicher- und/oder Bussystem daten- bzw. signalverbundene, insbesondere digitale, Verarbeitungs-, insbesondere Mikroprozessoreinheit aufweisen, die softwaretechnisch zum Abarbeiten eines solchen Programm(modul)s bzw. zur Durchführung eines erfindungsgemäßen Verfahrens eingerichtet ist.

Die Verknüpfungsfunktionsanordnung weist eine oder mehrere Verknüpfungsfunktionen auf. In einer Ausführung kann die Verknüpfungsfunktionsanordnung eine variable Anzahl von Verknüpfungsfunktionen aufweisen bzw. ein Anwender eine oder mehrere Verknüpfungsfunktionen generieren. In einer anderen Ausführung kann die Verknüpfungsfunktionsanordnung eine fest vorgegebene Anzahl von Verknüpfungsfunktionen aufweisen, von denen ein Anwender in einer Weiterbildung eine oder mehrere wahlweise aktivieren bzw. deaktivieren kann. Gleichermaßen können in einer Ausführung auch vom Anwender generierte Verknüpfungsfunktionen wahlweise aktivier- bzw. deaktivierbar sein.

In wenigstens einer, vorzugsweise in mehreren, insbesondere in allen Verknüpfungsfunktionen der Verknüpfungsfunktionsanordnung sind jeweils eine Anzahl von Überwachungsfunktionen einer Überwächungsfunktionsanordnung logisch miteinander verknüpft. Die Anzahl der Überwachungsfunktionen einer, insbesondere aller Verknüpfungsfunktionen ist in einer Ausführung, insbesondere für alle Verknüpfungsfunktionen gleich, fest vorgegeben und/oder beträgt wenigstens zwei, insbesondere genau drei. Es hat sich herausgestellt, dass durch maximal drei logisch miteinander verknüpfte Überwachungsfunktionen der Großteil aller Anwendungsfälle abdeckbar ist, wobei zugleich die Komplexität und damit Handhabbarkeit und Fehleranfälligkeit der Sicherheitsüberwachung optimiert wird.

Sofern in einer Verknüpfungsfunktion, deren Anzahl an Überwachungsfunktionen zum Beispiel mit drei fest vorgegeben ist, beispielsweise nur eine oder zwei Überwachungsfunktionen berücksichtigt werden sollen, kann in einer Ausführung der vorliegenden Erfindung eine Dummy-Überwachungsfunktion vorgesehen sein, mit der die vorgegebene Anzahl der Überwachungsfunktionen, insbesondere automatisch, aufgefüllt, vorzugsweise default-mäßig vorbelegt, wird.

Die einzelnen Überwachungsfunktionen der Überwachungsfunktionsanordnung können jeweils in Abhängigkeit von einem oder mehreren Signaleingängen der Roboteranordnung, insbesondere der Erfassungsmittelanordnung, einen ersten Zustand, einen hiervon verschiedenen zweiten Zustand und einen vom ersten und zweiten Zustand verschiedenen dritten Zustand aufweisen, die nachfolgend ohne Beschränkung der Allgemeinheit als "verletzt" bzw. Verletzt-Zustand, "nicht verletzt" bzw. Nicht-Verletzt-Zustand und "Fehler" bzw. Fehler-Zustand bezeichnet werden. Unter einem Zustand einer Funktion wird vorliegend insbesondere ihr Wert verstanden. Beispielsweise kann eine Funktion durch einen Kennzeichner ("Flag") implementiert sein, der wahlweise einen ersten, zweiten oder dritten Wert aufweisen kann, zum Beispiel "0", "1" und "2" oder "-1" oder dergleichen, und der den Zustand der Funktion definiert.

Eine Überwachungsfunktion weist in einer Ausführung den Verletzt-Zustand genau dann auf, wenn eine zugehörige bzw. durch die Überwachungsfunktion abgebildete Überwachung anspricht bzw. ein durch die Überwachung überwachtes Ereignis eintritt bzw. eingetreten ist und dies, insbesondere durch die Erfassungsmittelanordnung, erfasst wird bzw. worden ist. Beispielsweise kann eine Nothalt-Überwachungsfunktion den Verletzt-Zustand aufweisen, wenn ein Nothalt betätigt wird bzw. ist bzw. eine Nothalt-Überwachung anspricht.

Entsprechend weist eine Überwachungsfunktion in einer Ausführung den Fehler-Zustand auf, wenn eine zugehörige bzw. durch die Überwachungsfunktion abgebildete Überwachung fehlerbehaftet ist und dies, insbesondere durch die Erfassungsmittelanordnung, erfasst wird, beispielsweise ein Nothalt-Schalter oder dessen Signalverbindung mit dem Sicherheitsüberwachungsmittel defekt ist, beispielsweise ein Zweikanaligkeits-Fehler vorliegt, und dies erfasst wird.

Eine Überwachungsfunktion weist in einer Ausführung den Nicht-Verletzt-Zustand auf, wenn bzw. solange eine zugehörige bzw. durch die Überwachungsfunktion abgebildete Überwachung weder den Verletzt-Zustand noch den Fehler-Zustand aufweist. Gleichermaßen kann auch eine Überwachungsfunktion in einer Ausführung den Nicht-Verletzt-Zustand genau dann aufweisen, wenn eine zugehörige bzw. durch die Überwachungsfunktion abgebildete Überwachung aktiv eine Nichtverletzung erfasst, beispielsweise ein redundanter Schutzzauntürsensor auf beiden Kanälen ein entsprechendes aktives Signal sendet. Entsprechend kann die Überwachungsfunktion in einer Ausführung den Verletzt-Zustand aufweisen, wenn bzw. solange eine zugehörige bzw. durch die Überwachungsfunktion abgebildete Überwachung weder den Nicht-Verletzt-Zustand noch den Fehler-Zustand aufweist.

Nach diesem Aspekt der vorliegenden Erfindung sind somit (wenigstens) dreiwertige Überwachungsfunktionen vorgesehen.

Die Überwachungsfunktionen sind nach einer Ausführung in einer oder mehreren ersten Verknüpfungsfunktionen jeweils derart miteinander logisch verknüpft, dass die erste Verknüpfungsfunktion einen Reaktionszustand genau dann bzw. nur dann aufweist, wenn keine bzw. nicht wenigstens eine der Überwachungsfunktionen der Verknüpfungsfunktion den Nicht-Verletzt-Zustand aufweist:

(Z₁ = "nicht verletzt") ∨ (Z₂ = " nicht verletzt") ∨ (Z₃ = " nicht verletzt") ⇔ Zᵥ ≠ "Reaktionszustand"

mit den Zuständen Zᵢ der drei Überwachungsfunktionen i = 1, 2, 3, dem Zustand Zᵥ der Verknüpfungsfunktion und der logischen ODER-Verküpfung bzw. Disjunktion v, die nur dann nicht wahr ist, wenn alle verknüpften Argumente nicht wahr sind.

Auf diese Weise kann eine Reaktion in einer Ausführung der vorliegenden Erfindung vorteilhaft nur bzw. genau dann ausgelöst werden, wenn dies auch erforderlich ist.

Darf beispielsweise ein Roboter mit beliebiger Orientierung verfahren, wenn sein Laserwerkzeug abgeschaltet ist oder sich keine Person in seinem Arbeitsraum aufhält, kann eine Orientierungs-Überwachungsfunktion, eine Werkzeug-Überwachungsfunktion und eine Bedienerschutz-Überwachungsfunktion erfindungsgemäß miteinander verknüpft werden, so dass der Roboter nur stillgesetzt wird, wenn der Roboter eine unzulässige Orientierung aufweist, obwohl sein Laserwerkzeug eingeschaltet ist und sich aufgrund einer geöffneten Schutzzauntür eine Person in seinem Arbeitsraum aufhalten könnte. Solange hingegen der Roboter sicher mit der korrekten Orientierung verfährt (Orientierungs- Überwachungsfunktion "nicht verletzt" bzw. weder "verletzt" noch "Fehler") oder das Laserwerkzeug sicher abgeschaltet ist (Werkzeug-Überwachungsfunktion "nicht verletzt" bzw. weder "verletzt" noch "Fehler") oder sich sicher keine Person in seinem Arbeitsraum aufhalten kann (Bedienerschutz-Überwachungsfunktion "nicht verletzt" bzw. weder "verletzt" noch "Fehler"), muss der Roboter nicht stillgesetzt werden, selbst wenn eine dieser Überwachungen anspricht oder eine Fehlfunktion aufweist, beispielsweise ein Orientierungs-, Werkzeug- oder Schutzzauntür-Sensor defekt ist. Eine solche Fehlfunktion, infolge der die entsprechende Überwachungsfunktion den Fehler-Zustand aufweist, kann in einer Ausführung durch ein Ausgabemittel, insbesondere optisch und/oder akustisch, an einen Anwender und/oder signaltechnisch an eine Steuerung ausgegeben werden.

Somit führt in dieser Ausführung ein Ansprechen oder ein Fehler-Zustand einer Überwachungsfunktion nicht notwendigerweise zu einem Stillsetzen der kompletten Roboteranordnung. Zusätzlich kann die erfindungsgemäße Konfigurationsmöglichkeit durch die Verknüpfung von wenigstens zwei Überwachungsfunktionen zu einer Verknüpfungsfunktion eine hohe Flexibilität, einfache Handhabbarkeit und/oder geringe Fehleranfälligkeit bieten.

Die vorstehend erläuterte logische Verknüpfung kann, wie beschrieben, insbesondere eine oder mehrere ODER-Verknüpfungen aufweisen, insbesondere hieraus bestehen, so dass alle Überwachungsfunktionen der Verknüpfungsfunktion den Verletzt- oder Fehler-Zustand aufweisen müssen, um einen Reaktionszustand auszulösen. Gleichermaßen kann die erfindungsgemäße Verknüpfung auch mit UND-Verknüpfungen bzw. dadurch implementiert sein, dass die Verknüpfungsfunktion den Reaktionszustand nicht aufweist, wenn all ihre Verknüpfungsfunktionen den Verletzt- oder Fehler-Zustand aufweisen:

(Z₁ = " nicht verletzt") ∨ (Z₂ = "nicht verletzt") ⇔ (Z₁ = "verletzt" ∨ "Fehler") ∧ (Z₂ = "verletzt" ∨ "Fehler")

mit der logischen UND-Verknüpfung bzw. Konjunktion ∧, die genau dann wahr ist, wenn alle verknüpften Argumente wahr sind.

Allgemein kann in einer Ausführung auch eine Invertierung wenigstens einer Überwachungsfunktion vorgesehen bzw. das Konfigurationsmittel zum wahlweisen Invertieren wenigstens einer Überwachungsfunktion eingerichtet sein.

Beispielsweise kann ein sicherer Eingang eine Verletzung einer Sicherheitsüberwachung durch ein "Low"-Signal, eine "0" oder dergleichen darstellen, ein weiterer sicherer Eingang eine Verletzung einer weiteren Sicherheitsüberwachung umgekehrt durch ein "High"-Signal, eine "1" oder dergleichen. Um beide sicheren Eingänge miteinander verknüpfen zu können, kann, wie vorstehend erläutert, in einer Ausführung der vorliegenden Erfindung eine der beiden Überwachungsfunktionen invertiert werden, so dass beide eine Verletzung ihrer jeweiligen Sicherheitsüberwachung jeweils durch dasselbe Signal bzw. denselben Wert darstellen. Eine invertierte Überwachungsfunktion kann insbesondere den Verletzt-Zustand nur aufweisen, wenn die Überwachungsfunktion selber den Nicht-Verletzt-Zustand aufweist, und den Nicht-Verletzt-Zustand aufweisen, wenn die Überwachungsfunktion selber den Verletzt-Zustand oder den Fehler-Zustand aufweist. In einer anderen Ausführung kann eine invertierte Überwachungsfunktion den Verletzt-Zustand aufweisen, wenn die Überwachungsfunktion selber den Nicht-Verletzt-Zustand oder den Fehler-Zustand aufweist, und den Nicht-Verletzt-Zustand nur aufweisen, wenn die Überwachungsfunktion selber den Verletzt-Zustand aufweist.

Ebenso wie bei den vorstehend erläuterten Überwachungsfunktionen kann es auch zweckmäßig sein, eine Verknüpfungsfunktion zu invertieren, beispielsweise, um einen sicheren Ausgang als Reaktionszustand wahlweise mit "High"- oder "Low"-Signal, einer "1" oder "0" zu belegen oder dergleichen. Daher sind nach einer Ausführung der vorliegenden Erfindung zusätzlich oder alternativ zu einer oder mehreren ersten Verknüpfungsfunktionen Überwachungsfunktionen in einer oder mehreren zweiten Verknüpfungsfunktionen jeweils derart miteinander logisch verknüpft bzw. verknüpfbar, dass die zweite Verknüpfungsfunktion einen Reaktionszustand genau dann nicht aufweist, wenn alle Überwachungsfunktionen dieser Verknüpfungsfunktion den Verletzt-Zustand aufweisen:

(Z₁ = "verletzt") ∧ (Z₂ = "verletzt") ∧ (Z₃ = "verletzt") ⇔ Zᵥ ≠ "Reaktionszustand"

Die Ausführungen zu den ersten Verknüpfungsfunktionen gelten in entsprechender Weise auch für die zweiten Verknüpfungsfunktionen, so dass hierauf Bezug genommen wird. Insbesondere kann auch die vorstehend erläuterte logische Verknüpfung ebenfalls mit ODER-Verknüpfungen bzw. dadurch implementiert sein, dass die zweite Verknüpfungsfunktion den Reaktionszustand aufweist, wenn wenigstens eine ihre Verknüpfungsfunktionen den Nicht-Verletzt- oder Fehler-Zustand aufweist.

Eine zweite Verknüpfungsfunktion kann unter Beachtung der mehrwertigen Überwachungsfunktionen entsprechend insbesondere als eine invertierte erste Verknüpfungsfunktion betrachtet werden. Allgemein kann daher in einer Ausführung auch eine Invertierung wenigstens einer ersten in eine zweite Verknüpfungsfunktion und/oder einer zweiten in eine erste Verknüpfungsfunktion vorgesehen bzw. das Konfigurationsmittel zum wahlweisen Invertieren wenigstens einer ersten Verknüpfungsfunktion in eine zweite Verknüpfungsfunktion und/oder einer zweiten in eine erste Verknüpfungsfunktion eingerichtet sein. Eine oder mehrere zweite Verknüpfungsfunktionen können insbesondere auch eine oder mehrere invertierte Überwachungsfunktionen aufweisen. Allgemein gelten vorstehende und nachfolgende Ausführungen zu (ersten) Verknüpfungsfunktionen insbesondere auch für zweite Verknüpfungsfunktionen.

Insbesondere durch die wahlweise Invertierung einzelner Überwachungsfunktionen und/oder von Verknüpfungsfunktionen kann in einer Ausführung die Mächtigkeit des Sicherheitsüberwachungsmittels bzw. -verfahrens erhöht werden.

Die Verknüpfungsfunktionsanordnung kann in einer Ausführung, insbesondere softwaretechnisch, vorzugsweise durch Aktivieren eines Bildschirmsymbols, dadurch konfiguriert werden, dass der Anwender eine oder mehrere neue Verknüpfungsfunktionen generiert und/oder eine oder mehrere, insbesondere vorgegebene, Verknüpfungsfunktionen wahlweise aktiviert bzw. deaktiviert. Im Betrieb werden dann in einer Weiterbildung nur die aktivierten Verknüpfungsfunktionen ausgewertet bzw. überwacht. In einer Weiterbildung können ein oder mehrere primäre Verknüpfungsfunktionen der Verknüpfungsfunktionsanordnung nicht deaktiviert werden und ein oder mehrere sekundäre Verknüpfungsfunktionen der Verknüpfungsfunktionsanordnung wahlweise deaktiviert werden, wobei erste und/oder zweite bzw. invertierte Verknüpfungsfunktionen jeweils primäre oder sekundäre Verknüpfungsfunktionen sein können. Auf diese Weise können insbesondere essentielle Überwachungen durch nicht deaktivierbare Verknüpfungsfunktionen implementiert und so vor einem versehentlichen Deaktivieren geschützt werden, während gleichzeitig insbesondere weitere, nicht essentielle Überwachungen wahlweise deaktiviert werden können, um die Flexibilität der Sicherheitsüberwachung weiter zu erhöhen.

Eine oder mehrere Verknüpfungsfunktionen können in einer Ausführung, insbesondere softwaretechnisch, vorzugsweise durch Aktivieren eines Bildschirmsymbols, dadurch konfiguriert werden, dass der Anwender einen Reaktionszustand aus mehreren vorgegebenen Reaktionszuständen auswählt. Beispielsweise kann der Anwender wahlweise einen STOP 0, einen STOP 1, einen STOP 2, eine Warnmeldung, das Anfahren einer sicheren Pose, das Deaktivieren oder Aktivieren eines, insbesondere sicheren, Ausgangs oder dergleichen als Reaktionszustand bzw. Reaktion aus einer Bibliothek auswählen. Zusätzlich oder alternativ kann der Anwender den ausgewählten oder einen vorgegebenen Zustand parametrieren, beispielsweise eine Geschwindigkeit vorgeben, mit der eine sichere Pose anzufahren ist.

Wie vorstehend ausgeführt, wird vorliegend unter einem Zustand einer Funktion insbesondere ihr Wert verstanden. Weist eine Verknüpfungsfunktion einen Reaktionszustand auf, wird in einer Ausführung, insbesondere durch ein Auswerte- und Reaktionsmittel, während eines Betriebs der Roboteranordnung eine durch die Verknüpfungsfunktion bzw. deren Reaktionszustand vorgegebene Reaktion ausgelöst, beispielsweise ein, vorzugsweise sicherer, Ausgang entsprechend belegt.

In einer Ausführung können eine oder mehrere, insbesondere alle Überwachungsfunktionen einer oder mehrerer, insbesondere aller Verknüpfungsfunktionen der Verknüpfungsfunktionsanordnung, insbesondere softwaretechnisch, vorzugsweise durch Aktivieren eines Bildschirmsymbols, dadurch konfiguriert werden, dass der Anwender die jeweilige Überwachungsfunktion aus mehreren vorgegebenen Überwachungsfunktionen bzw. einer vorgegebenen Überwachungsfunktionsanordnung bzw. -bibliothek auswählt, insbesondere aus einer Nothalt-Überwachungsfunktion, die in einer Ausführung genau dann einen Verletzt-Zustand aufweist, wenn ein Nothalt betätigt wird bzw. ist, einer Betriebsart-Überwachungsfunktion, die in einer Ausführung genau dann einen Verletzt-Zustand aufweist, wenn eine vorgegebene bzw. parametrierte Betriebsart ausgewählt ist bzw. durchgeführt wird, insbesondere ein Automatik-, ein Test- oder ein Einrichte-Betrieb, einer Geschwindigkeits-Überwachungsfunktion, die in einer Ausführung genau dann einen Verletzt-Zustand aufweist, wenn ein oder mehrere Gelenke und/oder roboterfeste Referenzpunkte der Roboteranordnung eine vorgegebene bzw. parametrierte Geschwindigkeit überschreiten, einer Raum-Überwachungsfunktion, die in einer Ausführung genau dann einen Verletzt-Zustand aufweist, wenn die Roboteranordnung in einen vorgegebenen bzw. parametrierten Schutzraum eindringt oder einen vorgegebenen bzw. parametrierten Arbeitsraum verlässt, einer Bedienerschutz-Überwachungsfunktion, die in einer Ausführung genau dann einen Verletzt-Zustand aufweist, wenn ein Bedienerschutz nicht vorliegt, insbesondere ein Schutzraumzugang geöffnet und/oder eine Zustimmung nicht erfasst wird, einer Werkzeug-Überwachungsfunktion, die in einer Ausführung genau dann einen Verletzt-Zustand aufweist, wenn die Roboteranordnung ein vorgegebenes oder parametriertes Werkzeug führt bzw. nicht führt oder ein robotergeführtes Werkzeug einen vorgegebenen oder parametrierten Betriebszustand aufweist, insbesondere aktiviert oder stillgesetzt ist, einer Achsjustage-Überwachungsfunktion, die in einer Ausführung genau dann einen Verletzt-Zustand aufweist, wenn eine oder mehrere vorgegebene oder parametrierte Achsen der Roboteranordnung nicht justiert sind, und/oder einer Überwachungsfunktion eines, vorzugsweise sicheren, Eingangs. Zusätzlich oder alternativ kann der Anwender die ausgewählte oder vorgegebene Überwachungsfunktion parametrieren, beispielsweise eine Grenzgeschwindigkeit einer Geschwindigkeits-Überwachungsfunktion vorgeben, mit der ein Roboter maximal verfahren darf.

In einer Ausführung weist die vorgegebene Überwachungsfunktionsanordnung eine erste Dummy-Überwachungsfunktion auf, welche stets den Verletzt-Zustand aufweist, in einer Weiterbildung sind alle Überwachungsfunktionen von ersten und/oder zweiter Verknüpfungsfunktionen der Verknüpfungsfunktionsanordnung anfänglich bzw. default-mäßig mit der ersten Dummy-Überwachungsfunktion belegt. Zusätzlich oder alternativ können zweite und/oder erste Verknüpfungsfunktionen der Verknüpfungsfunktionsanordnung anfänglich bzw. default-mäßig mit zweiten Dummy-Überwachungsfunktionen belegt sein, die stets den Nicht-Verletzt-Zustand aufweisen. Entsprechend weist in einer Ausführung die vorgegebene Überwachungsfunktionsanordnung zusätzlich oder alternativ eine zweite Dummy-Überwachungsfunktion auf, welche stets den Nicht-Verletzt-Zustand aufweist

Auf diese Weise können mit einer konsistenten, einheitlichen Verknüpfungsfunktionsanordnungsstruktur auch einzelne Überwachungsfunktionen oder Überwachungsfunktionsverknüpfungen überwacht werden, die nicht voll belegt sind.

Beispielsweise kann eine Nothalt-Überwachung, die stets bzw. unabhängig von weiteren Überwachungen durchgeführt werden soll, dadurch implementiert werden, dass eine Nothalt-Überwachungsfunktion mit ersten Dummy-Überwachungsfunktionen verknüpft wird, um die Anzahl der Überwachungsfunktionen einer ersten Verknüpfungsfunktion zu erreichen bzw. zu belegen. Da diese stets den Verletzt-Zustand aufweisen, nimmt die Verknüpfungsfunktion in diesem Fall genau dann den Reaktionszustand ein, wenn (auch) die Nothalt-Überwachungsfunktion den Verletzt- oder Fehler-Zustand aufweist, d.h. hängt nur von der Nothalt-Überwachungsfunktion ab.

In einer Ausführung werden die Verknüpfungsfunktionsanordnung, in einer Weiterbildung die aktivierten Verknüpfungsfunktionen der Verknüpfungsfunktionsanordnung, durch ein Auswerte- und Reaktionsmittel während eines Betriebs der Roboteranordnung ständig ausgewertet, insbesondere unabhängig von einem Zustand der Roboteranordnung und/oder eines von dieser ausgeführten Prozesses, vorzugsweise periodisch. In Abhängigkeit von einem Reaktionszustand der Verknüpfungsfunktionsanordnung löst das Auswerte- und Reaktionsmittel eine durch die Verknüpfungsfunktion vorgegebene Reaktion aus, beispielsweise einen STOP 0, STOP 1, STOP 2 oder ein Deaktivieren (bzw. Aktivieren) eines, insbesondere sicheren, Ausgangs, wenn dies als Reaktionszustand der jeweiligen Verknüpfungsfunktion vorgegeben ist.

In einer Ausführung kann vorgesehen bzw. das Konfigurationsmittel dazu eingerichtet sein, dieselbe Überwachungsfunktion in zwei oder mehr Verknüpfungsfunktionen zu verwenden, in einer Weiterbildung unterschiedlich parametriert, beispielsweise mit unterschiedlichen Grenzgeschwindigkeiten. Dies kann insbesondere dadurch implementiert sein, dass mehrere Instanzen derselben Überwachungsfunktion vorgesehen bzw. durch den Anwender auswähl-, insbesondere parametrierbar sind.

Insbesondere in einem solchen Fall können - infolge derselben Überwachungsfunktion - mehrere Verknüpfungsfunktionen einen Reaktionszustand aufweisen. Insbesondere für diesen Fall kann in einer Ausführung der vorliegenden Erfindung vorgesehen sein, dass in Abhängigkeit der Reaktionszustände von zwei oder mehr Verknüpfungsfunktionen der Verknüpfungsfunktionsanordnung eine höherrangige Reaktion ausgelöst wird. Weist beispielsweise eine Verknüpfungsfunktion den Reaktionszustand STOP 1, eine andere den Reaktionszustand STOP 0 auf, kann als höherrangige Reaktion ein STOP 0 durchgeführt werden. Insbesondere kann in einer Ausführung ein, vorzugsweise sicherer, Ausgang immer deaktiviert oder immer aktiviert werden, wenn wenigstens eine Verknüpfungsfunktion, die mit diesem Ausgang verknüpft ist bzw. diesen belegt, den Reaktionszustand aufweist. Mit anderen Worten kann in einer Ausführung stets der Pegel "0" gewinnen, in einer anderen Ausführung stets der Pegel "1" bzw. "High".

Wie vorstehend ausgeführt, kann das Konfigurieren der Verknüpfungsfunktionsanordnung insbesondere graphisch durch Auswählen, insbesondere "Anklicken", entsprechender Bildschirmsymbole erfolgen, allgemein mithilfe einer graphischen Benutzerschnittstelle bzw. -oberfläche. Auf diese Weise kann in einer Ausführung eine Sicherheitsüberwachung einfach, rasch und/oder fehlersicher konfiguriert und insbesondere an unterschiedliche Roboteranordnungen und/oder Roboterarbeitsprozesse angepasst werden. Das Konfigurationsmittel, das Auswerte- und Reaktionsmittel und/oder das Ausgabemittel können ganz oder teilweise in einer Steuerung der Roboteranordnung implementiert sein, insbesondere - wenigstens teilweise - auf einem Handbediengerät mit einer graphischen Ein-/Ausgabefläche. Gleichermaßen kann insbesondere das Konfigurationsmittel auch in einem externen Gerät bzw. durch ein externes Gerät implementiert sein, beispielsweise ein Notebook oder dergleichen, wobei das externe Gerät in einer Ausführung während des Betriebs nicht mit der Steuerung der Roboteranordnung verbunden oder von dieser trennbar ist.

Weitere Vorteile und Merkmale ergeben sich aus den Unteransprüchen und den Ausführungsbeispielen. Hierzu zeigt, teilweise schematisiert, die einzige:

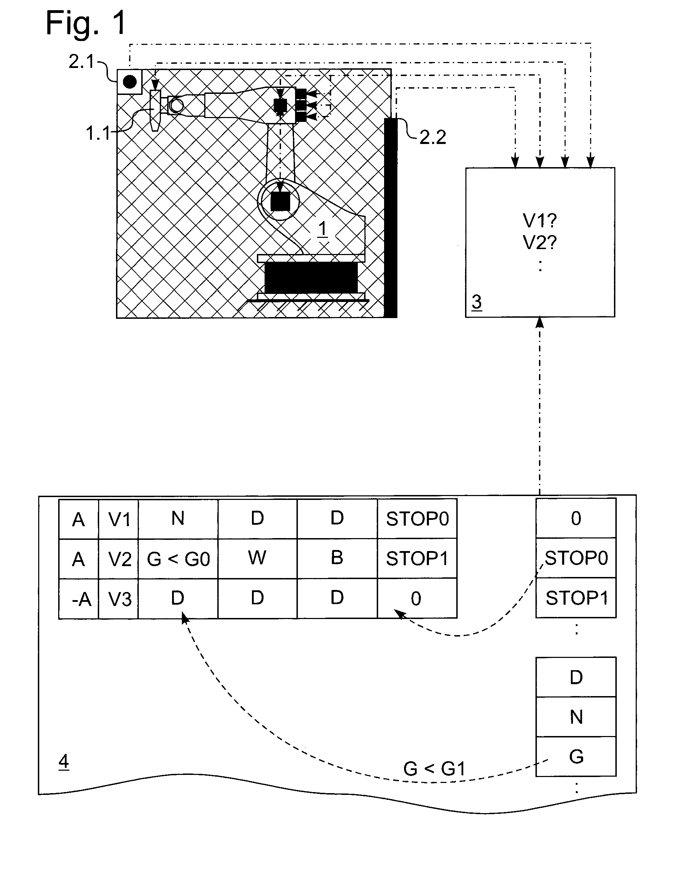

- Fig. 1:: ein Konfigurieren einer Sicherheitsüberwachung einer Roboteranordnung mit einem Roboter, einer Erfassungsmittelanordnung und einem Sicherheitsüberwachungsmittel nach einer Ausführung der vorliegenden Erfindung.

Fig. 1 zeigt eine Roboteranordnung mit einem sechsachsigen Knickarmroboter 1 in einem durch einen Schutzzaun abgegrenzten Arbeitsraum. Zum Steuern des Roboters weist die Roboteranordnung eine mit diesem signalverbundene Steuerung 3 auf.

Die Roboteranordnung weist weiter eine Erfassungsmittelanordnung mit mehreren Erfassungsmitteln zum redundanten, vorzugsweise diversitären, Erfassen von Sicherheitsgrößen auf. Ein Erfassungsmittel zum Erfassen einer eindimensionalen Sicherheitsgröße ist durch einen Nothalt-Schalter 2.1 ausgebildet, der mit der Steuerung 3 signalverbunden ist, wie in Fig. 1 strichpunktiert angedeutet. Ein weiteres Erfassungsmittel zum Erfassen einer mehrdimensionalen Sicherheitsgröße ist durch Sensoren zum Erfassen einer Stellung und/oder Geschwindigkeit der Gelenke bzw. Antriebe des Roboters 1 ausgebildet, die ebenfalls mit der Steuerung 3 signalverbunden sind. In einer Weiterbildung kann dieses Erfassungsmittel diese Stellungen bzw. Geschwindigkeit weiterverarbeiten, insbesondere durch eine Vorwärtstransformation, um eine Position, Orientierung bzw. Geschwindigkeit eines roboterfesten Referenzpunktes, insbesondere des TCPs, eines robotergeführten Laserwerkzeugs oder dergleichen zu erfassen. Ein weiteres Erfassungsmittel zum Erfassen einer eindimensionalen Sicherheitsgröße ist durch einen Türsensor zum Überwachen einer Schutzzauntür 2.2 ausgebildet, der ebenfalls mit der Steuerung 3 signalverbunden ist und eine Bedienschutzüberwachung implementiert. Ein weiteres Erfassungsmittel zum Erfassen einer eindimensionalen Sicherheitsgröße ist durch einen Werkzeugsensor zum Überwachen eines robotergeführten Laserwerkzeugs 1.1 ausgebildet, der ebenfalls mit der Steuerung 3 signalverbunden ist und eine Werkzeugüberwachung implementiert.

Ein Sicherheitsüberwachungsmittel der Roboteranordnung ist hardwaretechnisch durch die Steuerung 3, die ein Auswerte- und Reaktionsmittel im Sinne der vorliegenden Erfindung implementiert, und eine Bildschirmmaske 4 mit entsprechenden Eingabemitteln (nicht dargestellt), beispielsweise einem Touchscreen, einer Maus, einer Tastatur oder dergleichen, die ein Konfigurations- und Ausgabemittel im Sinne der vorliegenden Erfindung implementiert, softwaretechnisch durch hierauf installierte entsprechende Programme bzw. Programmmodule implementiert. Insbesondere sind die Steuerung 3 und die Bildschirmmaske 4 mit entsprechenden Eingabemitteln programmtechnisch zur Durchführung des nachfolgend beschriebenen erfindungsgemäßen Verfahrens eingerichtet.

Das Konfigurationsmittel 4 ist zum Konfigurieren einer Verknüpfungsfunktionsanordnung eingerichtet, die im Ausführungsbeispiel mehrere Verknüpfungsfunktionen V1, V2 und V3 aufweist, die in Fig. 1 zeilenweise untereinander dargestellt bzw. angeordnet sind. In einer Weiterbildung kann ein Anwender weitere Verknüpfungsfunktionen generieren (nicht dargestellt).

Die Verknüpfungsfunktionen V1, V2 und V3 können vom Anwender durch Anklicken des entsprechenden Feldes in der in Fig. 1 linken Spalte wahlweise aktiviert (Fig. 1: "A") bzw. deaktiviert (Fig. 1: "-A") werden. In dem in Fig. 1 gezeigten Zustand sind die beiden oberen Verknüpfungsfunktionen V1 und V2, die bereits fertig konfiguriert sind, aktiviert, die unterste Verknüpfungsfunktion V3, die gerade konfiguriert wird, noch deaktiviert. In der zweiten Spalte ist der Name der Verknüpfungsfunktion dargestellt, dieser kann in einer Weiterbildung durch den Anwender parametriert bzw. eingegeben werden, beispielsweise "NOTHALT!" statt "V1" oder dergleichen.

In allen Verknüpfungsfunktionen V1 - V3 sind jeweils drei Überwachungsfunktionen einer Überwachungsfunktionsanordnung logisch miteinander verknüpft. Die Anzahl der miteinander verknüpften Überwachungsfunktionen ist in dieser Ausführung fest vorgegeben und beträgt drei, wobei in Fig. 1 die drei miteinander verknüpften Überwachungsfunktionen in der jeweils dritten, vierten und fünften Spalte der entsprechenden Zeile der jeweiligen Verknüpfungsfunktion dargestellt sind. Es sei darauf hingewiesen, dass die graphische Darstellung rein exemplarisch eine Ausführung der vorliegenden Erfindung zeigt.

Wie man an der dritten Zeile bzw. Verknüpfungsfunktion V3, die gerade konfiguriert wird, erkennt, sind die Überwachungsfunktionen anfänglich bzw. default-mäßig mit einer Dummy-Überwachungsfunktion D vorbelegt, welche stets einen Verletzt-Zustand aufweist (Z_{D} = "verletzt").

Die Überwachungsfunktionen der Verknüpfungsfunktionen V1 - V3 werden im Ausführungsbeispiel, wie in Fig. 1 durch einen strichlierten Eingabepfeil für die dritte Zeile bzw. Verknüpfungsfunktion V3, die gerade konfiguriert wird, angedeutet, durch Aktivieren eines Bildschirmsymbols konfiguriert, indem der Anwender die jeweilige Überwachungsfunktion aus mehreren vorgegebenen Überwachungsfunktionen bzw. einer vorgegebenen Überwachungsfunktionsanordnung bzw. -bibliothek auswählt, die in Fig. 1 am rechten unteren Rand der Bildschirmmaske 4 angedeutet ist.

In dem in Fig. 1 gezeigten Zustand wird als erste Überwachungsfunktion der Verknüpfungsfunktion V3 gerade, beispielsweise durch "drag&drop" oder Anklicken der Stelle in der Verknüpfungsfunktion und anschließendes Anklicken der gewünschten Überwachungsfunktion in der Überwachungsfunktionsanordnung, eine Geschwindigkeits-Überwachungsfunktion G ausgewählt, die genau dann einen Verletzt-Zustand aufweist, wenn der TCP des Roboters 1 eine durch den Anwender parametrierte Geschwindigkeit G1 überschreitet. Hierzu wird eine parametrierte Instanz G < G1 der Geschwindigkeits-Überwachungsfunktion G in die Verknüpfungsfunktion V3 implementiert.

Anschließend oder vorab wählt der Anwender in gleicher Weise einen Reaktionszustand aus mehreren vorgegebenen Reaktionszuständen bzw. einer vorgegebenen Reaktionszustandsanordnung bzw. -bibliothek aus, die in Fig. 1 am rechten oberen Rand der Bildschirmmaske 4 angedeutet ist. Im Beispiel wählt der Anwender einen STOP 0 aus.

Die drei Überwachungsfunktionen G < G1, D und D der Verknüpfungsfunktion V3 sind derart miteinander logisch verknüpft, dass die Verknüpfungsfunktion V3 den Reaktionszustand STOP 0 genau dann aufweist, wenn keine der Überwachungsfunktionen G < G1, D und D der Verknüpfungsfunktion V3 den Nicht-Verletzt-Zustand aufweist. Da die beiden default-vorbelegten Dummy-Überwachungsfunktionen D stets den Verletzt-Zustand aufweisen, weist die so konfigurierte Verknüpfungsfunktion V3 den Reaktionszustand STOP 0 genau dann auf, wenn die Steuerung 3 im Betrieb eine Überschreitung der parametrierten Geschwindigkeit G1 durch den Roboter 1 oder einen Fehler in der Geschwindigkeitsüberwachung erfasst. Diese führt dann einen STOP 0 aus. Auf diese Weise hat der Anwender in einfacher, anschaulicher und fehlersicherer Weise eine gewünschte Geschwindigkeits-Überwachung in der Sicherheitsüberwachung implementiert, die er nun wahlweise aktivieren kann, indem er in der ersten Spalte von "-A" auf "A" stellt.

Im Ausführungsbeispiel ist in gleicher Weise eine Nothalt-Überwachung durch die aktivierte Verknüpfungsfunktion V1 implementiert , die eine Nothalt-Überwachungsfunktion N, die genau dann einen Verletzt-Zustand aufweist, wenn der Nothalt 2.1 betätigt wird bzw. ist, mit zwei Dummy-Überwachungsfunktionen D derart logisch verknüpft, dass die Verknüpfungsfunktion V1 den Reaktionszustand STOP 0 genau dann aufweist, wenn alle Überwachungsfunktionen N, D und D der Verknüpfungsfunktion V1 jeweils den Verletzt- oder Fehler-Zustand aufweisen. Wenn die Steuerung 3 im Betrieb eine Betätigung oder einen Fehler des Nothalt-Schalters 2.1 erfasst, führt sie entsprechend einen STOP 0 aus.

Die Mächtigkeit dieses Konfigurationsmittels wird insbesondere an der Verknüpfungsfunktion V2 deutlich: in dieser sind eine anders parametrierte Instanz G < G0 der Geschwindigkeits-Überwachungsfunktion G, die genau dann einen Verletzt-Zustand aufweist, wenn der TCP des Roboters 1 eine durch den Anwender parametrierte Geschwindigkeit G0 (<G1) überschreitet, einer Werkzeug-Überwachungsfunktion W, die genau dann einen Verletzt-Zustand aufweist, wenn das robotergeführte Laserwerkzeug 1.1 aktiviert ist, und eine Bedienerschutz-Überwachungsfunktion B, die genau dann einen Verletzt-Zustand aufweist, wenn der Türsensor eine geöffnete Schutzzauntür 2.2 an die Steuerung 3 meldet, derart miteinander logisch verknüpft, dass die Verknüpfungsfunktion V2 den Reaktionszustand STOP 1 genau dann aufweist, wenn keine der Überwachungsfunktionen G < G0, W und B der Verknüpfungsfunktion V2 den Nicht-Verletzt-Zustand aufweist bzw. diese Funktionen jeweils entweder den Verletzt- oder den Fehler-Zustand aufweisen.

Somit darf der Roboter 1 schneller als G0 verfahren, wenn sein Laserwerkzeug 1.1 sicher bzw. fehlerfrei erfasst abgeschaltet ist oder sich aufgrund der sicher bzw. fehlerfrei erfasst geschlossenen Schutzzauntür 2.2 keine Person in seinem Arbeitsraum aufhält. Der Roboter wird nur stillgesetzt, wenn er sich zu schnell bewegt oder seine Geschwindigkeit nicht fehlerfrei erfasst wird (G < G0 "verletzt" bzw. "Fehler"), obwohl sein Laserwerkzeug eingeschaltet ist oder dies aufgrund eines Fehlers nicht sicher erfasst werden kann (W "verletzt" bzw. "Fehler") und sich aufgrund einer geöffneten Schutzzauntür eine Person in seinem Arbeitsraum aufhalten könnte oder dies aufgrund eines Fehlers nicht sicher erfasst werden kann (B "verletzt" bzw. "Fehler").

Solange hingegen der Roboter 1 sicher langsam genug verfährt (Geschwindigkeits-Überwachungsfunktion G < G0 "nicht verletzt") oder das Laserwerkzeug 1.1 sicher abgeschaltet ist (Werkzeug-Überwachungsfunktion W "nicht verletzt") oder sich sicher keine Person in seinem Arbeitsraum aufhalten kann (Bedienerschutz-Überwachungsfunktion B "nicht verletzt"), muss der Roboter nicht stillgesetzt werden, selbst wenn eine dieser Überwachungen eine Fehlfunktion aufweist, beispielsweise ein Geschwindigkeits-, Werkzeug- oder Schutzzauntür-Sensor defekt ist. Eine solche Fehlfunktion, infolge der die entsprechende Überwachungsfunktion den Fehler-Zustand aufweist, wird durch eine entsprechende optische Meldung am Ausgabemittel 4 an den Anwender und signaltechnisch an die Steuerung 3 ausgegeben, die daraufhin beispielsweise ein Aktivieren des Laserwerkzeugs 1.1 unterbinden kann.

Stellt die Geschwindigkeitsüberwachung eine Überschreitung der höheren Grenzgeschwindigkeit G1 fest, stellt sie zwangsläufig auch eine Überschreitung der niedrigeren Grenzgeschwindigkeit G0 < G1 fest. Somit können die beiden Verknüpfungsfunktionen V2 und V3 jeweils den Reaktionszustand aufweisen. Die Steuerung 3 führt in diesem Fall die höherrangige Reaktion STOP 0 aus.

Die einzelnen Überwachungsfunktionen bzw. Überwachungsfunktionsinstanzen N, G < G0, G < G1, W und B können jeweils in Abhängigkeit von den Signaleingängen des Nothaltschalters, Laserwerkzeug-Sensors, Schutzzauntürsensors und der Gelenkantriebe der Erfassungsmittelanordnung, den Verletzt-Zustand, den hiervon verschiedenen Nicht-Verletzt-Zustand und den von beiden verschiedenen Fehler-Zustand aufweisen. Die Nothalt-Überwachungsfunktion N weist den Verletzt-Zustand auf, wenn der Nothaltschalter 2.1 betätigt wird bzw. ist, den Fehler-Zustand, wenn der Nothalt-Schalter 2.1 oder dessen Signalverbindung mit der Steuerung 3 defekt ist, beispielsweise ein Zweikanaligkeitsfehler vorliegt und erfasst wird, und den Nicht-Verletzt-Zustand, wenn bzw. solange weder der Verletzt-Zustand noch der Fehler-Zustand vorliegt. Die Geschwindigkeits-Überwachungsfunktion G weist den Verletzt-Zustand auf, wenn die Grenzgeschwindigkeit G0 bzw. G1 überschritten wird bzw. ist, den Fehler-Zustand, wenn ein Gelenkantriebspositions- oder -geschwindigkeitssensor oder dessen Signalverbindung mit der Steuerung 3 defekt ist, und den Nicht-Verletzt-Zustand, wenn bzw. solange weder der Verletzt-Zustand noch der Fehler-Zustand vorliegt. Die Werkzeug-Überwachungsfunktion W weist den Verletzt-Zustand auf, wenn das Laserwerkzeug 1.1 aktiviert ist, den Fehler-Zustand, wenn der Laserwerkzeugsensor oder dessen Signalverbindung mit der Steuerung 3 defekt ist, und den Nicht-Verletzt-Zustand, wenn bzw. solange weder der Verletzt-Zustand noch der Fehler-Zustand vorliegt. Die Bedienschutz-Überwachungsfunktion B weist den Verletzt-Zustand auf, wenn der Sensor der Schutzzauntür 2.2 erfasst, dass diese geöffnet wird bzw. ist, den Fehler-Zustand, wenn der Sensor oder dessen Signalverbindung mit der Steuerung 3 defekt ist, und den Nicht-Verletzt-Zustand, wenn bzw. solange weder der Verletzt-Zustand noch der Fehler-Zustand vorliegt. Wie vorstehend ausgeführt, kann gleichermaßen beispielsweise die Bedienschutz-Überwachungsfunktion B den Nicht-Verletzt-Zustand aufweisen, wenn der Sensor der Schutzzauntür 2.2 aktiv ein "Geschlossen"-Signal ausgibt, den Fehler-Zustand, wenn der Sensor oder dessen Signalverbindung mit der Steuerung 3 defekt ist, und den Verletzt-Zustand, wenn bzw. solange weder der Nicht-Verletzt-Zustand noch der Fehler-Zustand vorliegen.

Nach dem vorstehend erläuterten Konfigurieren kann die Sicherheitsüberwachung durch die Steuerung 3 ausgeführt und hierzu ein entsprechendes Programm bzw. Daten von dem Konfigurationsmittel 4 an diese übertragen werden, wie dies durch eine strichpunktierte Signalverbindung in Fig. 1 angedeutet ist. Gleichermaßen kann die Steuerung 3 umgekehrt beispielsweise eine Fehlermeldung infolge eines Fehler-Zustandes einer, insbesondere aktivierten, Überwachungsfunktion, auf dem Bildschirm 4 ausgeben. Die Steuerung 3 wertet im Betrieb ständig die oben erläuterten Überwachungs- und Verknüpfungsfunktionen aus.

Im vorstehenden Ausführungsbeispiel wurde die Erfindung anhand erster Verknüpfungsfunktionen V1-V3 mit einer ersten Dummy-Überwachungsfunktion D exemplarisch erläutert, die einen STOP 0 oder STOP 1 auslösen. Natürlich können zusätzlich oder alternativ andere Reaktionen bzw. Reaktionszustände vorgesehen sein, insbesondere ein STOP 2 oder ein entsprechendes Belegen, insbesondere Deaktivieren bzw. Abschalten, eines sicheren Ausgangs (nicht dargestellt). Zusätzlich oder alternativ zu den ersten Verknüpfungsfunktionen V1-V3 können insbesondere auch zweite bzw. invertierte Verknüpfungsfunktionen vorgesehen sein (nicht dargestellt). Zusätzlich oder alternativ können eine oder mehrere Überwachungsfunktionen, von denen wiederum mit N, G, W, B und D nur eine exemplarisch dargestellt sind, invertiert und als invertierte Überwachungsfunktionen verknüpft werden.

### Bezugszeichenliste

- 1: Roboter
- 1.1: Laserwerkzeug
- 2.1: Nothalt-Schalter
- 2.2: Schutzzauntür(sensor)
- 3: Steuerung
- 4: Bildschirmmaske

## Patentansprüche

1. Sicherheitsüberwachungsmittel für eine Roboteranordnung mit wenigstens einem Roboter (1), wobei das Sicherheitsüberwachungsmittel ein Konfigurationsmittel (4) zum Konfigurieren einer Verknüpfungsfunktionsanordnung aufweist mit wenigstens einer ersten Verknüpfungsfunktion (V1, V2, V3),
in der eine, insbesondere fest vorgegebene, Anzahl von Überwachungsfunktionen (N, G, W, B, D) einer Überwachungsfunktionsanordnung,
die jeweils in Abhängigkeit von wenigstens einem Signaleingang der Roboteranordnung einen Verletzt-Zustand, einen Nicht-Verletzt-Zustand und einen Fehler-Zustand aufweisen können,
jeweils derart miteinander logisch verknüpft sind, dass die erste Verknüpfungsfunktion einen Reaktionszustand (STOP 0, STOP 1) genau dann aufweist, wenn keine der Überwachungsfunktionen dieser Verknüpfungsfunktion den Nicht-Verletzt-Zustand aufweist; und/oder
wenigstens einer zweiten Verknüpfungsfunktion,
in der eine, insbesondere fest vorgegebene, Anzahl von Überwachungsfunktionen der Überwachungsfunktionsanordnung jeweils derart miteinander logisch verknüpft sind, dass die zweite Verknüpfungsfunktion einen Reaktionszustand genau dann nicht aufweist, wenn alle Überwachungsfunktionen dieser Verknüpfungsfunktion den Verletzt-Zustand aufweisen.

2. Sicherheitsüberwachungsmittel nach dem vorhergehenden Anspruch, **dadurch gekennzeichnet, dass** das Konfigurationsmittel
zum Parametrieren und/oder zum Auswählen des Reaktionszustandes wenigstens einer Verknüpfungsfunktion der Verknüpfungsfunktionsanordnung aus mehreren vorgegebenen Reaktionszuständen (STOP 0, STOP 1),
zum Parametrieren (G0, G1) und/oder zum Auswählen wenigstens einer Überwachungsfunktion (G) wenigstens einer Verknüpfungsfunktion (V2, V3) der Verknüpfungsfunktionsanordnung aus mehreren vorgegebenen Überwachungsfunktionen, und/oder
zum wahlweisen Aktivieren (A, -A) wenigstens einer Verknüpfungsfunktion der Verknüpfungsfunktionsanordnung ausgebildet ist.

3. Sicherheitsüberwachungsmittel nach einem der vorhergehenden Ansprüche, **gekennzeichnet durch** ein Auswerte- und Reaktionsmittel (3) zum ständigen Auswerten der Verknüpfungsfunktionsanordnung während eines Betriebs der Roboteranordnung und zum Auslösen einer Reaktion in Abhängigkeit von einem Reaktionszustand der Verknüpfungsfunktionsanordnung.

4. Sicherheitsüberwachungsmittel nach dem vorhergehenden Anspruch, **dadurch gekennzeichnet, dass** das Auswerte- und Reaktionsmittel zum Auslösen einer höherrangigen Reaktion (STOP 0) in Abhängigkeit der Reaktionszustände (STOP 0, STOP 1) von wenigstens zwei Verknüpfungsfunktionen der Verknüpfungsfunktionsanordnung ausgebildet ist.

5. Sicherheitsüberwachungsmittel nach einem der vorhergehenden Ansprüche, **gekennzeichnet durch** ein Ausgabemittel (4) zum Ausgeben eines dieses anzeigenden Signals, falls eine Überwachungsfunktion den Fehler-Zustand aufweist.

6. Sicherheitsüberwachungsmittel nach einem der vorhergehenden Ansprüche, **dadurch gekennzeichnet, dass** die Überwachungsfunktionsanordnung eine Nothalt-Überwachungsfunktion (N), eine Betriebsart-Überwachungsfunktion, eine Geschwindigkeits- Überwachungsfunktion (G), eine Raum-Überwachungsfunktion, eine Bedienerschutz-Überwachungsfunktion (B), eine Werkzeug-Überwachungsfunktion (W), eine Achsjustage-Überwachungsfunktion, eine Überwachungsfunktion eines, insbesondere sicheren, Eingangs, und/oder eine Dummy-Überwachungsfunktion (D) aufweist.

7. Sicherheitsüberwachungsmittel nach einem der vorhergehenden Ansprüche, **dadurch gekennzeichnet, dass** es zum Durchführen eines Verfahrens nach einem der nachfolgenden Ansprüche eingerichtet ist.

8. Verfahren zur Sicherheitsüberwachung einer Roboteranordnung mit wenigstens einem Roboter mittels eines Sicherheitsüberwachungsmittels nach einem der vorhergehenden Ansprüche, mit dem Schritt:
Konfigurieren (G0, G1, N, W, B, STOP 0, STOP 1, A, -A) der Verknüpfungsfunktionsanordnung.

9. Verfahren nach dem vorhergehenden Anspruch, mit dem Schritt:
Parametrieren und/oder Auswählen (STOP 0, STOP 1) des Reaktionszustandes wenigstens einer Verknüpfungsfunktion der Verknüpfungsfunktionsanordnung aus mehreren vorgegebenen Reaktionszuständen,
Parametrieren (G0, G1) und/oder Auswählen wenigstens einer Überwachungsfunktion (G) wenigstens einer Verknüpfungsfunktion der Verknüpfungsfunktionsanordnung aus mehreren vorgegebenen Überwachungsfunktionen, und/oder
wahlweises Aktivieren (A, -A) wenigstens einer Verknüpfungsfunktion der Verknüpfungsfunktionsanordnung.

10. Verfahren nach einem der vorhergehenden Ansprüche, mit den Schritten:
ständiges Auswerten der Verknüpfungsfunktionsanordnung während eines Betriebs der Roboteranordnung, und
Auslösen einer Reaktion in Abhängigkeit von einem Reaktionszustand der Verknüpfungsfunktionsanordnung.

11. Verfahren nach dem vorhergehenden Anspruch, **dadurch gekennzeichnet, dass** eine höherrangige Reaktion (STOP 0) in Abhängigkeit der Reaktionszustände (STOP 0, STOP 1) von wenigstens zwei Verknüpfungsfunktionen der Verknüpfungsfunktionsanordnung ausgelöst wird.

12. Verfahren nach einem der vorhergehenden Ansprüche, mit dem Schritt:
Ausgeben eines dieses anzeigenden Signals, falls eine Überwachungsfunktion den Fehler-Zustand aufweist.

13. Verfahren nach einem der vorhergehenden Ansprüche, **dadurch gekennzeichnet, dass** die Überwachungsfunktionsanordnung eine Nothalt-Überwachungsfunktion (N), eine Betriebsart-Überwachungsfunktion, eine Geschwindigkeits-Überwachungsfunktion (G), eine Raum-Überwachungsfunktion, eine Bedienerschutz-Überwachungsfunktion (B), eine Werkzeug-Überwachungsfunktion (W), eine Achsjustage-Überwachungsfunktion, eine Überwachungsfunktion eines sicheren Eingangs, und/oder eine Dummy-Überwachungsfunktion (D) aufweist.

14. Computerprogrammprodukt mit einem Programmcode, der auf einem von einem Computer lesbaren Medium gespeichert ist, zur Durchführung eines Verfahrens nach einem der vorhergehenden Ansprüche.

15. Roboteranordnung mit wenigstens einem Roboter (1), einer Erfassungsmittelanordnung mit wenigstens zwei Erfassungsmitteln (2.1, 2.2) zum Erfassen einer Sicherheitsgröße, und einem Sicherheitsüberwachungsmittel nach einem der vorhergehenden Ansprüche, dessen Überwachungsfunktionen jeweils in Abhängigkeit von wenigstens einem Signaleingang der Erfassungsmittelanordnung einen Verletzt-Zustand, einen Nicht-Verletzt-Zustand und einen Fehler-Zustand aufweisen können.
